# EUROPÄISCHE PATENTSCHRIFT

(11) **EP 3 163 207 B1**
(45) Veröffentlichungstag und Bekanntmachung des Hinweises auf die Patenterteilung: **11.10.2023**
(21) Anmeldenummer: 16001782.8
(22) Anmeldetag: 11.08.2016
(51) Int. Cl.: F24H 1/18, F28D 20/00, F16F 15/18

(54) **VORRICHTUNG ZUM EINSPEISEN EINES FLUIDS UND DEREN VERWENDUNG**
DEVICE FOR FEEDING A FLUID AND ITS USE
DISPOSITIF D'ALIMENTATION EN FLUIDE ET SON UTILISATION

(30) Priorität: 27.08.2015 WO PCT/EP2015/001748
(43) Veröffentlichungstag der Anmeldung: 03.05.2017
(73) Patentinhaber: Kettl, Ralph, 7417 Paspels (CH)
(72) Erfinder: Kettl, Ralph, 7417 Paspels (CH)
(74) Vertreter: Pfenning, Meinig & Partner mbB

(56) Entgegenhaltungen:
- EP-A2- 0 995 953
- EP-A2- 1 936 314
- EP-A2- 2 527 777
- DE-A1- 19 825 463
- DE-B3-102007 027 570
- DE-U1- 20 304 744
- DE-U1-202010 004 802
- US-A- 2 207 057
- US-A- 4 127 143

## Beschreibung

Die vorliegende Erfindung betrifft eine Vorrichtung zum Einspeisen eines Fluids in einen Behälter, einen Behälter umfassend diese Vorrichtung sowie die Verwendung der Vorrichtung in den Bereichen Solar- und Haustechnik. Ausserdem wird ein Verfahren zum Einspeisen eines Fluids in einen Behälter bereitgestellt, welches die Vorrichtung verwendet.

Fossile Brennstoffe stehen nur in begrenzter Menge zur Verfügung, ausserdem sind sie Mitverursacher der globalen Erwärmung. Als Alternative wird die Nutzung erneuerbarer Energien, wie z.B. Solarenergie oder Windkraft vorangetrieben, diese stehen in nahezu unbegrenztem Umfang zur Verfügung. Die erneuerbaren oder regenerative Energien kommen zum Beispiel in Warmwasserspeichern zum Einsatz.

DE 39 05 874 A1 betrifft Warmwasserspeicher mit einem von Brauchwasser durchströmten Heizkreis mit aussen liegendem Heizelement und einer Ladewechselvorrichtung mit einem im Speicher angeordneten Warmwasserzuführer im Vorlauf des Heizkreises. Das Heizelement ist dabei mit in Abständen übereinander angeordneten Auslässen versehen, in bzw. an denen Klappenventile angeordnet sind, die den Speicherraum öffnen. Die Klappe des Klappenventils ist als Platte mit einem hochflexiblen Dichtungsbereich mit hoher Flächenpressung ausgebildet und mit einer einseitigen Aufhängung versehen, die senkrecht zum Ventilsitz eine hohe Elastizität aufweist.

In EP 1 076 219 A1 wird eine Speicheranordnung mit einer in einem ein Fluid enthaltenden Speicherbehälter angeordneten Einschichtvorrichtung beschrieben. Diese bildet einen vertikalen Hauptströmungsspalt und einen diesen umgebenden Trennbereich zum umgebenden Fluid und weist eine Mehrzahl vertikal unterschiedlich positionierter Ausströmungskanäle durch den Trennbereich zur dichteabhängigen Einschichtung eines Fluidstroms aus dem Hauptströmungsspalt in das umgebende Fluid auf. Die Ausströmungskanäle weisen im radialen Verlauf zwischen Hauptströmungsspalt und Umgebungsbereich und von diesen beabstandet wenigstens ein vertikales Maximum und/oder wenigstens ein vertikales Minimum auf.

EP 0683 362 A1 betrifft einen Warmwasserschichtspeicher, insbesondere für eine Raumheizung, mit einem Speicherbehälter, der mit Heizungswasser als Speichermedium füllbar ist, mit wenigstens einem Vorlauf-Eingang zum Anschluss an wenigstens einer Energiequelle.

DE 197 43 563 A1 betrifft einen Wärmeschichtspeicher mit einem im wesentlichen vertikal ausgerichteten Speicherbehälter zum Aufnehmen einer wärmespeichernden Flüssigkeit und mit wenigstens einer Entnahmestelle sowie wenigstens einer Einleitstelle für die Flüssigkeit. Der Speicherbehälter weist wenigstens ein Hauptspeichervolumen und wenigstens ein Nebenspeichervolumen auf und die Einleitstelle die in das Nebenspeichervolumen mündet ist über wenigstens eine Öffnung mit dem Hauptspeichervolumen verbunden, die sich zumindest abschnittsweise im wesentlichen entlang dem Temperaturgefälle erstreckt.

EP 0995 953 A2 betrifft eine Warmwasser-Speicheranordnung nach dem Speicher-in-Speicher-Bauprinzip. Die beschriebene Vorrichtung enthält einen Hauptspeicher und einen in dessen oberem Bereich angeordneten Innenspeicher, der von einer gering beabstandeten Hüllwand umgeben ist, welche mit dem Innenspeicher einen oben zum Hauptspeicher offenen Strömungsspalt bildet und nach unten in einen in den unteren Bereich des Hauptspeichers führenden Abströmkanal mündet. Der Abströmkanal weist eine Mehrzahl seitlicher Öffnungen auf unterschiedlicher Höhe auf. Die dem Strömungsspalt zugewandte Wandung des Innenspeichers, also eine Wand des Strömungsspalts, besteht aus einem gut wärmeleitenden Material, wohingegen die den Strömungsspalt zum Hauptspeicher abgrenzende Wand aus einem schlecht wärmeleitenden Material besteht. Eine davon abweichende Materialwahl für die Aussen- und Innenwand würde zu einer Verminderung der Effizienz führen, bzw. wäre bei hohen Durchflussgeschwindigkeiten nicht mehr funktionsfähig. Darin besteht ein wesentlicher Unterschied zur Vorrichtung gemäss der vorliegenden Erfindung, die keinen Speicher-in-Speicher-Aufbau vorsieht. Weiterhin beinhaltet die Speicheranordnung gemäss EP 0 995 953 A2 keinen Diffusor.

Die im Stand der Technik beschriebenen Lösungen weisen entweder geringe Wirkungsgrade auf, benötigen eine lange Zeit bis ein akzeptabler Wirkungsgrad erzielt wird und/oder weisen Limitierungen bezüglich der Durchflussvolumina auf. Da das Wetter in einigen Gebieten wie z.B. Mitteleuropa äussert wechselhaft ist, ist es wichtig auch kurze Sonneneinstrahlungsphasen effektiv nutzen zu können.

In Anbetracht des Standes der Technik liegt der Erfindung die Aufgabe zu Grunde eine Vorrichtung bereit zu stellen, die es ermöglicht innerhalb kurzer Zeit hohe Wirkungsgrade zu erreichen und die den Betrieb mit variablen Durchflussvolumina ermöglicht ohne dabei signifikante Einbussen in der Effektivität zu erleiden. Weiterhin besteht die Aufgabe eine Vorrichtung bereit zu stellen die den Anforderungen des Benutzers angepasst werden kann, so sollen beispielsweise Wärmepumpen eingesetzt werden können, ohne dass die Temperaturschichtung verloren geht und Begrenzungen bezüglich der maximalen Volumina und bezüglich des maximalen Leistungseintrags können umgangen werden.

Diese Aufgabe wird durch eine Vorrichtung **(1)** zum Einspeisen eines Fluids in einen Behälter **(2)** gemäss Anspruch 1 gelöst, welche die folgenden Merkmale umfasst,
a) mindestens eine Einströmvorrichtung **(3);**
b) mindestens einen Steigspalt **(4)** der durch eine hintere Fläche **(4a)** und eine vordere Fläche **(4b)** ausgebildet wird, wobei die Flächen **(4a)** und **(4b)** im wesentlichen in vertikaler Richtung parallel zueinander angeordnet sind und ihr Abstand im Bereich von 2.5 bis 10 mm liegt und die Flächen **(4a)** und **(4b)** zum Behälter **(2)** im wesentlichen vertikal orientiert sind;
c) mindestens eine Verbindung **(5)** zwischen der Einströmvorrichtung **(3)** und dem mindestens einen Steigspalt **(4);**
d) mindestens eine Austrittsöffnung **(6);**

wobei die mindestens eine Einströmvorrichtung **(3)** mindestens einen Diffusor **(7)** umfasst und der Diffusor **(7)** eine Kammer **(10a),** eine Platte **(10b)** und einen Spalt **(10c)** umfasst;
wobei durch die Platte **(10b)** eine obere Kammer **(10a1)** und eine untere Kammer **(10a2)** ausgebildet werden; wobei der Spalt **(10c)** eine für ein Fluid durchlässige Öffnung zwischen den beiden Kammern **(10a1)** und **(10a2)** ausbildet; wobei die Einströmvorrichtung **(3)** mit der unteren Kammer **(10a2)** verbunden ist; und wobei die Verbindung **(5)** zwischen der oberen Kammer **(10a2)** und dem Steigspalt **(4)** angeordnet ist.

Im folgenden werden bevorzugte Ausführungsformen der Vorrichtung **(1)** angegeben.

In einer 2. Ausführungsform umfasst die Vorrichtung **(1)** weiterhin
e) mindestens eine mit dem Steigspalt **(4)** verbundene Umlenkvorrichtung **(8)** und/oder
f) mindestens einen Auströmspalt **(9)** der durch eine äussere Platte **(9a)** und eine innere Platte **(9b)** ausgebildet wird, wobei die Platten **(9a)** und **(9b)** im wesentlichen parallel zueinander angeordnet sind und ihr Abstand im Bereich von 3 bis 10 mm liegt und die Platten **(9a)** und **(9b)** zum Behälter **(2)** im wesentlichen vertikal orientiert sind.

Gemäss einer 3. Ausführungsform ist die mindestens eine Austrittsöffnung **(6)** am Ende des mindestens einen Auströmspalts **(9)** angebracht.

Gemäss einer weiteren Ausführungsform ist der Spalt **(10c)** zwischen der Aussenwand **(12)** und der Platte **(10b)** angeordnet und/oder die Breite des Spalts **(10c)** liegt im Bereich von 2 bis 20 mm, bevorzugt 5 bis 15 mm und besonders bevorzugt 6 bis 10 mm.

Gemäss einer weiteren Ausführungsform ist die Verbindung **(5)** ein Loch, welches rechteckig, kreisförmig oder ellipsenförmig ausgeformt wird, bevorzugt ein rundes oder elliptisch ausgeformtes Loch und besonders bevorzugt ein rechteckig ausgeformtes Loch, welches umlaufend zum Steigspalt hin einen Radius **(5r)** von mindestens 3 mm aufweist.

Gemäss einer weiteren Ausführungsform weist der Steigspalt **(4)** über die komplette Länge einen gleichen oder variablen Abstand zwischen den Flächen **(4a)** und **(4b)** auf, wobei ein variabler Abstand bevorzugt ist und/oder der Steigspalt eine Länge von 5 cm bis 10 m, bevorzugt 10 cm bis 3 m und besonders bevorzugt 15 cm bis 1.5 m aufweist.

Gemäss einer weiteren Ausführungsform sind die Flächen **(4a)** und **(4b)** ausgewählt aus der Gruppe bestehend aus Platten, bevorzugt gekrümmten oder geformten Platten und Rohren.

Gemäss einer weiteren Ausführungsform weist der Ausströmspalt **(8)** eine Länge im Bereich von 5 cm bis 1 m, bevorzugt von 10 bis 50 cm und besonders bevorzugt von 15 bis 30 cm auf.

Gemäss einer weiteren Ausführungsform sind die Flächen **(4a)** und **(4b)** und die Platten **(9a)** und **(9b)** aus einem Material ausgewählt aus der Gruppe bestehend aus Polypropylen, Polystyrol, Polyamid, Polyketon, Polyphenylensulfid, Polyphenyloxid, Polyoxymethylen, Fluorkunststoffen, Epoxyharzen, Polyesterharzen, Vinylesterharzen und Phenolharzen und/oder Mischungen daraus, wobei Polyethylen und Polypropylen bevorzugt sind und/oder, die Flächen **(4a)** und **(4b)** und die Platten **(9a)** und **(9b)** sind aus einer thermisch isolierenden Konstruktion aufgebaut.

Gemäss einer weiteren Ausführungsformenthält die Vorrichtung **(1)** eine Austrittsöffnung **(6)** und die Vorrichtung 1 ist zirkular oder L-förmig aufgebaut, oder die Vorrichtung **(1)** enthält zwei Austrittsöffnungen **(6a)** und **(6b)** und ist U-förmig oder T-förmig aufgebaut, wobei ein U-förmiger Aufbau bevorzugt ist.

Eine weitere Ausführungsform betrifft einen Behälter **(2)** enthaltend eine Vorrichtung **(1)** nach einer der zuvor beschriebenen Ausführungsformen.

Gemäss einer weiteren Ausführungsform besteht der Behälter **(2)** aus einem Material, welches ausgewählt ist aus der Gruppe bestehend aus Stahl, bevorzugt Edelstahl, Kunststoffen und Verbundwerkstoffen und/oder Mischungen daraus, wobei Edelstahl bevorzugt ist und/oder
weist eine Wandstärke im Bereich von 0.5 bis 10 mm, bevorzugt von 1 bis 10 mm und besonders bevorzugt von 1 bis 3 mm auf und/oder eine Höhe im Bereich von 1 bis 100 m, bevorzugt von 1 bis 10 m und besonders bevorzugt von 1 bis 2.5 m auf und/oder in mindestens einer Dimensionen, bevorzugt in beiden Dimensionen, eine Breite b und/oder Tiefe a im Bereich von 0.3 bis 10 m, bevorzugt von 0.3 bis 5 m und besonders bevorzugt von 0.5 bis 1.5 m auf.

Eine weitere Ausführungsform der Erfindung betrifft die Verwendung einer Vorrichtung **(1)** gemäss einer der zuvor beschriebenen Ausführungsformen oder eines Behälters **(2)** gemäss einer der zuvor beschriebenen Ausführungsformen in den Bereichen Solartechnik oder Haustechnik.

Eine weitere Ausführungsform der Erfindung betrifft ein Verfahren zum Einspeisen eines Fluids in einen Behälter **(2),** wobei eine Vorrichtung **(1)** gemäss einer der zuvor beschriebenen Ausführungsformen verwendet wird.

Unter dem "Schichtwirkungsgrad" im Sinne der vorliegenden Erfindung versteht man das Verhältnis aus der Temperatur am oberen Ende des Behälters 20 cm bis 100 cm (abhängig von der Grösse des verwendeten Behälters) entfernt von der Auströmöffnung und der Temperatur des eingespeisten Fluids.

Ein "Diffusor" ist gemäss der vorliegenden Erfindung eine Vorrichtung, die eine turbulente Strömung in eine laminare Strömung umwandelt.

Der Behälter kann gemäss der vorliegenden Erfindung aus jedem beliebigen Material bestehen, bevorzugte Materialien sind ausgewählt aus der Gruppe bestehend aus Stahl, bevorzugt Edelstahl, Kunststoffen und Verbundwerkstoffen und/oder Mischungen daraus, wobei Edelstahl bevorzugt ist. Besonders bevorzugt ist der Edelstahltyp Typ V4A.

Die Wandstärke des Behälters liegt dabei im Bereich von 0.5 bis 10 mm, bevorzugt von 1 bis 5 mm und besonders bevorzugt von 1 bis 3 mm. Bei Behälterwandstärken unter 0.5 mm hält der Behälter dem hydrostatischen Druck ab einer bestimmten Höhe nicht mehr stand. Bei zu grossen Wandstärken hingegen wird Energie über die Wand, welche einen höheren Wärmleitkoeffizienten als Wasser aufweist, nach unten geleitet, wodurch ein Einbruch des Wirkungsgrad auftritt.

Die Höhe des Behälters liegt im Bereich von 1 bis 100 m, bevorzugt von 1 bis 10 m und besonders bevorzugt von 1 bis 2.5 m. Der Behälter kann beispielsweise rund, elliptisch oder rechteckig ausgebildet sein. Weiterhin weist der Behälter in mindestens einer Dimensionen, bevorzugt in beiden Dimensionen, eine Breite b und/oder Tiefe a im Bereich von 0.3 bis 10 m, bevorzugt von 0.3 bis 5 m und besonders bevorzugt von 0.5 bis 1.5 m auf. Der Behälter kann mit Versteifungsrippen versehen sein, um höheren hydrostatischen Drücken standzuhalten. Diese Bauweise ist besonders für dünnwandige Behälter, wie z.B. Behälter mit einer Wandstärke von unter 10 mm, angebracht.

Die Dimensionen des Behälters können flexibel dem Einsatzgebiet angepasst werden. Im Bereich Haustechnik werden die Dimensionen massgeblich dadurch bestimmt, dass der Behälter problemlos in ein Gebäude transportiert und dort angebracht werden kann.

Die Einströmvorrichtung gemäss der vorliegenden Erfindung umfasst einen Diffusor. Dieser verlangsamt die Einströmgeschwindigkeit des Fluids und gewährleistet eine laminare Strömung des einströmenden Fluids. Der Diffusor kann dabei jede beliebige Form annehmen, so sind z.B. runde Bauformen bevorzugt die Öffnungswinkel im Bereich von 3 bis 7° aufweisen, eine besonders bevorzugte Ausführung ist die Trompetenform. Der Diffusor kann beispielsweise rund, elliptisch oder auch rechteckig ausgeformt sein.

Durch Auswahl eines geeigneten Diffusors kann die Vorrichtung bei variablen Durchflussmenge des Fluids betrieben werden, ohne dass Einbussen bezüglich des Schichtwirkungsgrads hinzunehmen sind. So kann die Vorrichtung mit Durchflussmengen von 1.5 bis 50 l/min betrieben werden. Das Fluid kann beispielsweise über einen Schlauch oder über ein Rohr in den Diffusor eingeleitet werden.

Erfindungsgemäß ist für die Vorrichtung ein Kammerdiffusor, der eine Kammer, eine Platte und einen Spalt umfasst wobei durch die Platte eine obere Kammer und eine untere Kammer ausgebildet werden wobei der Spalt eine für ein Fluid durchlässige Öffnung zwischen den beiden Kammern ausbildet, wobei das Fluid über die untere Kammer eingeleitet wird und wobei die Verbindung zwischen der oberen Kammer und dem Steigspalt angeordnet ist. Das Fluid strömt dabei durch die untere Kammer ein und trifft gegen eine Wand, bevorzugt gegen eine Fläche des Steigspalts, und wird dann entgegen der Einströmrichtung zurück geleitet. Nun strömt das Fluid durch den Spalt in die obere Kammer und tritt durch eine Verbindung in den Steigspalt der Vorrichtung ein. Über die Masse des Spalts zwischen der oberen und unteren Kammer, die Masse der Verbindung zwischen oberer Kammer und Steigspalt sowie der Breite des Diffusors kann der Bereich der Durchflussmenge des Fluids eingestellt werden. Der Einsatz von Kammerdiffusoren erlaubt dem Operator den Betrieb der Vorrichtung über einen sehr breiten Bereich von Durchflussmengen, wie z.B. von 0.5 bis 50 l/min und ermöglicht hohe Flexibilität.

Bevorzugt ist es, dass die Breite des Spalts zwischen der oberen und unteren Kammer des Kammerdiffusors im Bereich von 2 bis 20 mm, bevorzugt 5 bis 15 mm und besonders bevorzugt 6 bis 10 mm liegt. Eine kleinere Spaltbreite als 2 mm führt zu erhöhten Strömungsgeschwindigkeiten und verursacht turbulente Strömungen. Eine Spaltbreite von mehr als 20 mm hingegen weisst keine Drosselwirkung auf, Einströmturbulenzen werden nicht ausgedrosselt. Die Spaltbreite von 2 bis 20 mm hingegen ermöglicht eine laminare Strömung.

Sofern das Fluid exzentrisch in den Steigspalt einströmt kann dieser an einer Seite mit einer seitlichen Abschlussplatte verschlossen werden. Unter einer exzentrischen Einströmung im Sinn der vorliegenden Erfindung ist zu verstehen, dass die Einströmvorrichtung abweichend von der Mitte des Steigspalts angebracht ist. Sofern die Einströmvorrichtung um mehr als 20 % von der Mitte des Steigspalts angebracht wurde, ist es bevorzugt die kürzere Seite des Steigspalts mit einer Abschlussplatte zu verschliessen.

Wenn Kammerdiffusoren gemäss der oben beschriebenen Ausführungsform zum Einsatz kommen, ist die Verbindung zwischen dem Steigspalt und dem Diffusor, besonders bevorzugt in der oberen Kammer des Diffusors angeordnet.

Ein Spalt im Sinne der vorliegenden Erfindung wird durch 2 Flächen begrenzt, wohingegen Kanäle durch 3 Flächen begrenzt werden.

Der Steigspalt gemäss der vorliegenden Erfindung wird durch eine hintere und eine vordere Fläche ausgebildet, die im wesentlichen in vertikaler Richtung parallel ausgebildet sind. Des weiteren sind die Flächen vertikal zum Behälter orientiert und weisen einen Abstand von 2.5 bis 10 mm zueinander auf. Ein geringerer Abstand als 2.5 mm würde sehr breite Flächen bedingen, da ansonsten das Fluid viel zu früh (tief) in den Behälter austreten würde und nicht bis zu einer Höhe aufsteigen würde, wo der Dichteunterschied des Fluids und der Behälterflüssigkeit ausgeglichen ist. Ein höherer Abstand als 10 mm bewirkt, dass das Fluid während des Aufsteigens beschleunigt wird und bereits nach einer kurzen Strecken (ca. 100 mm über dem Diffusor) eine turbulente Strömung entsteht (= Kamineffekt). Daraus resultiert eine Vermischung des Fluids mit der Behälterflüssigkeit und eine Reduktion des Schichtwirkungsgrads.

Bevorzugt ist der Abstand zwischen den Flächen 2 bis 10 mm und besonders bevorzugt 3.5 bis 6 mm.

Die den Steigspalt ausbildenden Flächen können gemäss der vorliegenden Erfindung über die komplette Länge einen variablen oder einen gleichen Abstand aufweisen, wobei der variable Abstand bevorzugt ist. Die Flächen können durch Abstandshalter befestigt werden.

Die Länge des Steigspalts kann variabel den Massen des Behälters angepasst werden, bevorzugt ist eine Länge von 5 cm bis 10 m, besonders bevorzugt eine Länge von 10 cm bis 3 m und insbesondere bevorzugt eine Länge von 15 cm bis 1.5 m.

In einer Ausführungsform sind die den Steigspalt ausbildenden Flächen in vertikaler Richtung derart zueinander angeordnet, dass die Abweichung von der Parallelität nicht mehr als 20 % bevorzugt nicht mehr als 10 % beträgt. In einer besonders bevorzugten Ausführungsform sind die Flächen derart zueinander angeordnet, dass die Flächen parallel zueinander angeordnet sind.

In einer weiteren Ausführungsform sind die den Steigspalt ausbildenden Flächen zum Behälter derart angeordnet, dass die Abweichung von der vertikalen Anordnung nicht mehr als 30 % bevorzugt nicht mehr als 20 % beträgt. In einer besonders bevorzugten Ausführungsform sind die Flächen derart zueinander angeordnet, dass die Flächen vertikal zum Behälter orientiert sind.

Die den Steigspalt ausbildenden Flächen sind bevorzugt Platten, Rohre oder Schläuche. So ist es beispielsweise möglich den Steigspalt zirkular auszubilden, wenn z.B. 2 Rohre ineinander angebracht werden. Weiterhin können gekrümmte Platten oder Rohre verwendet werden, was einen variablen Abstand ermöglicht.

In einer besonders bevorzugten Ausführungsform umfasst die Vorrichtung nur einen Steigspalt.

In einer Ausführungsform bildet die Wand des Behälters eine Fläche des Steigspalts.

Die Austrittsöffnung ist in einer Ausführungsform in der die Vorrichtung keinen Ausströmspalt umfasst bevorzugt am Ende des Steigspalts angeordnet.

Die Verbindung zwischen der Einströmvorrichtung und dem mindestens einen Steigspalt ist in einer Ausführungsform als Loch ausgebildet. Dieses Loch kann rund, elliptisch oder rechteckig ausgeformt sein, bevorzugt ist ein rechteckig ausgeformtes Loch, welches umlaufend zum Steigspalt hin einen Radius von mindestens 3 mm aufweist. Besonders durch ein rechteckig ausgeformtes Loch wird ein laminares Einströmen des Fluids in den Steigspalt ermöglicht. Die Vermeidung von Turbulenzen erfolgt durch die sehr geringe Einströmgeschwindigkeit. Überraschenderweise entstehen bei einem Radius von weniger als 3 mm Turbulenzen, was eine Reduktion des Schichtwirkungsgrads nach sich zieht. In einer besonders bevorzugten Form ist die Abrundung des Loch in Form einer Trompete mit einem Öffnungswinkel von kleiner als 7° ausgebildet.

Des Weiteren umfasst die Vorrichtung gemäss der vorliegenden Erfindung mindestens eine Austrittsöffnung. Diese Austrittsöffnung kann in Form eines Spalts ausgebildet sein. Die Öffnung kann zum Beispiel tulpenförmig, trompetenförmig, rechteckig oder keilförmig ausbildet werden, wobei ein keilförmig geöffneter Spalt bevorzugt ist.

In einer weiteren Ausführungsform sind die den Steigspalt ausbildenden Flächen mit einer Umlenkvorrichtung und/oder einem Ausströmspalt verbunden.

Unter einer Umlenkvorrichtung ist im Sinne der vorliegenden Erfindung eine Vorrichtung zu verstehen, welche die Strömungsrichtung des Fluids umlenkt. Eine zirkulare Ausformung des Steigspalts ist ebenfalls als Umlenkvorrichtung zu verstehen.

Die Umlenkvorrichtung kann dabei die Strömungsrichtung des Fluids in beliebigen Winkeln umlenken, bevorzugt ist eine Umlenkung um 30° bis 150°, besonders bevorzugt ist eine Umlenkung um 90°. Die Umlenkung um 90° ermöglicht es Materialkosten einzusparen, ausserdem sind aufwendige Schnitte nicht notwendig.

Die Umlenkvorrichtung kann beispielsweise als eine Ecke von einem L oder 2 Ecken von einem U ausgeformt sein.

In einer weiteren bevorzugten Ausführungsform schliesst sich an die Umlenkvorrichtung ein Ausströmspalt an. Dieser wird durch eine äussere Platte und eine innere Platte ausgebildet, wobei diese Platten im wesentlichen parallel zueinander angeordnet sind und ihr Abstand im Bereich von 3 bis 10 mm liegt. Weiterhin sind die Platten zum Behälter im wesentlichen vertikal orientiert.

In einer anderen bevorzugten Ausführungsform erstreckt sich der Ausströmspalt (9) im wesentlichen in vertikaler Richtung über die Höhe des Behälters (2). Dieser Aufbau erlaubt es das einströmende Fluid entsprechend seine Dichte exakt einzuschichten.

Die den Ausströmspalt ausbildenden Platten können gemäss der vorliegenden Erfindung über die komplette Länge einen variablen oder einen gleichen Abstand aufweisen. Die Platten können durch Abstandshalter befestigt werden.

In einer Ausführungsform sind die den Ausströmspalt ausbildenden Flächen in vertikaler Richtung derart zueinander angeordnet, dass die Abweichung von der Parallelität nicht mehr als 20 % bevorzugt nicht mehr als 10 % beträgt. In einer besonders bevorzugten Ausführungsform sind die Platten derart zueinander angeordnet, dass die Platten parallel zueinander angeordnet sind.

In einer weiteren Ausführungsform sind die den Ausströmspalt ausbildenden Platten zum Behälter derart angeordnet, dass die Abweichung von der vertikalen Anordnung nicht mehr als 30 %, bevorzugt nicht mehr als 20 % beträgt. In einer besonders bevorzugten Ausführungsform sind die Platten derart zueinander angeordnet, dass die Platten vertikal zum Behälter orientiert sind.

Gemäss einer Ausführungsform der vorliegenden Erfindung weist der Auströmspalt eine Länge im Bereich von 5 cm bis 1 m, bevorzugt von 10 bis 50 cm und besonders bevorzugt von 15 bis 30 cm auf. Generell sind kurze Bauweisen bevorzugt, um Materialkosten einzusparen. Allerdings darf das Fluid nicht zu früh in den Behälter eintreten, da ansonsten Einbussen des Schichtwirkungsgrads hinzunehmen sind.

Nach einer weiteren Ausführungsform sind die den Auströmspalt bildenden Platten vertikal zum Behälter orientiert und weisen einen Abstand von 2.5 bis 10 mm zueinander auf. Ein geringerer Abstand als 2.5 mm würde sehr breite Flächen bedingen, da ansonsten das Fluid viel zu früh (tief) in den Behälter austreten würde und nicht bis zu einer Höhe aufsteigen würde, wo der Dichteunterschied des Fluids und der Behälterflüssigkeit ausgeglichen ist. Ein höherer Abstand als 10 mm bewirkt, dass das Fluid während des Aufsteigens beschleunigt wird und bereits nach einer kurzen Strecken (ca. 100 mm über dem Diffusor) eine turbulente Strömung entsteht (= Kamineffekt). Daraus resultiert eine Vermischung des Fluids mit der Behälterflüssigkeit und eine Reduktion des Schichtwirkungsgrads.

In einer Ausführungsform bildet die Wand des Behälters eine Platte des Auströmspalts.

Sofern die Vorrichtung einen Ausströmspalt besitzt ist es bevorzugt die Austrittsöffnung am Ende dieses Ausströmspalts anzubringen.

Gemäss einer Ausführungsform der vorliegenden Erfindung können die den Steigspalt ausbildenden Flächen und die den Ausströmspalt ausbildenden Flächen aus den selben oder aus verschiedenen Materialien bestehen, bevorzugt ist es die selben Materialien zu wählen.

In einer Ausführungsform sind die Flächen **(4a)** und **(4b)** und die Platten **(9a)** und **(9b)** aus einem Material ausgewählt aus der Gruppe bestehend aus Polypropylen, Polystyrol, Polyamid, Polyketon, Polyphenylensulfid, Polyphenyloxid, Polyoxymethylen, Fluorkunststoffen, Epoxyharzen, Polyesterharzen, Vinylesterharzen und Phenolharzen und/oder Mischungen daraus ist, wobei Polyethylen und Polypropylen bevorzugt sind. Generell sind thermisch isolierende Materialien für die Flächen **(4a)** und **(4b)** sowie die Platten **(9a)** und **(9b)** bevorzugt. Es ist in keiner Weise erforderlich thermisch leitfähige Materialien zu verwenden.

Gemäss einer weiteren Ausführungsform sind die Flächen **(4a)** und **(4b)** und die Platten **(9a)** und **(9b)** aus einer thermisch isolierenden Konstruktion aufgebaut. Thermisch isolierende Konstruktionen im Sinne der Erfindung sind z.B. Hohlkammerformen wie Doppelstegplatten, oder eingeschäumte Materialien die ebenfalls eine verminderte Wärmeleitung ermöglichen.

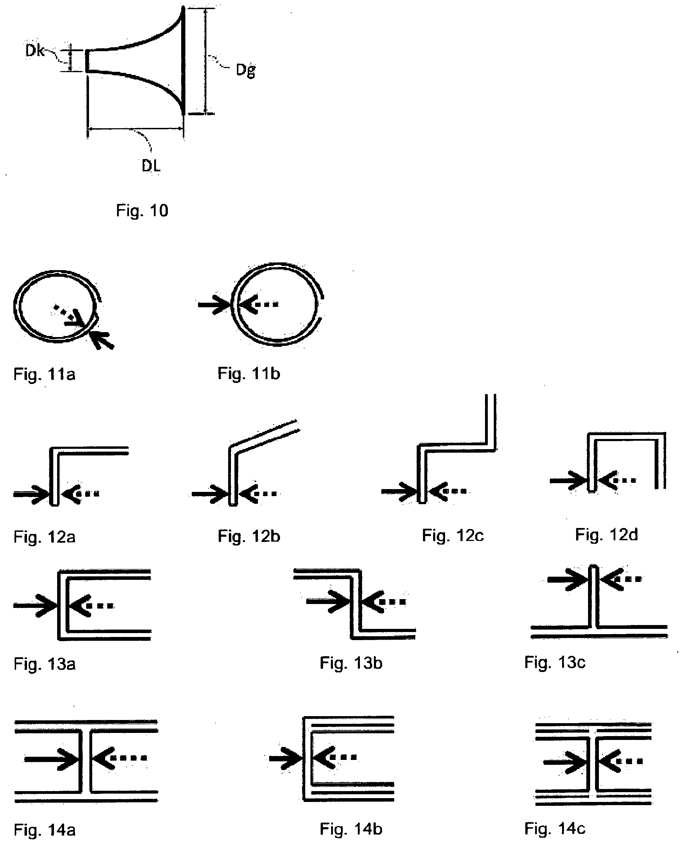

In einer weiteren Ausführungsform der vorliegenden Erfindung enthält die Vorrichtung eine Austrittsöffnung und ist zirkular aufgebaut. Diese Ausführungsform ist in Figur 11 dargestellt.

Gemäss einer weiteren Ausführungsform der vorliegenden Erfindung enthält die Vorrichtung zwei Austrittsöffnungen und ist U-Förmig oder T-förmig aufgebaut, wobei ein U-förmiger Aufbau bevorzugt ist. Der U-förmige Aufbau ermöglichst es besonders günstig zu produzieren.

Das in die Vorrichtung einzuspeisende Fluid ist bevorzugt eine Flüssigkeit, z.B. Wasser, wie Leitungswasser, enthärtetes Wasser, deionisiertes Wasser oder Brauchwasser. Prinzipiell ist die Vorrichtung aber auch zum Einspeisen anderer Fluide geeignet.

Das Fluid kann Zusätze ausgewählt aus der Gruppe bestehend aus Inhibitoren, Stabilisatoren, Glykolen, Korrosionsschutzmitteln, Biozide wie z.B. zur Vermeidung von Algenbildung oder der Bildung anderer Mikroorganismen und/oder Mischungen daraus enthalten.

Gemäss einer Ausführungsform beträgt die Temperatur des Fluids -20 bis 120°C, bevorzugt 0 bis 100°C, besonders bevorzugt 5 bis 98°C und insbesondere bevorzugt von 25 bis 70°C.

Weiterhin betrifft die vorliegende Erfindung die Verwendung der Vorrichtung in den Bereich Solar- und Haustechnik.

Eine weitere Ausführungsform der vorliegenden Erfindung betrifft ein Verfahren zum Einspeisen eines Fluids in einen Behälter. Ein bevorzugtes Verfahren verwendet dabei Durchflussmengen des Fluids von 0.5 bis 50 l/min und Temperaturen des Fluids von 5 bis 98°C.

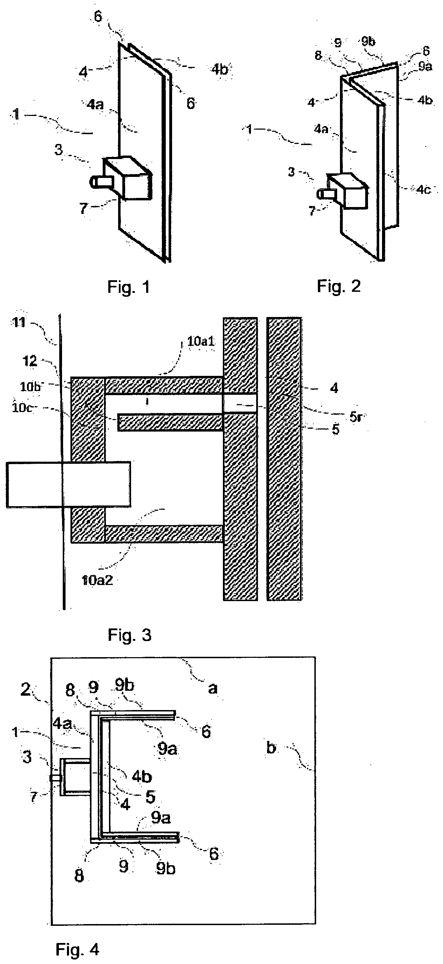

Figur 1 zeigt eine Vorrichtung **(1)** gemäss der vorliegenden Erfindung die keine Umlenkung und keinen Ausströmspalt umfasst. Das Fluid wird über eine Einströmvorrichtung **(3)** die ein Rohr und einen Diffusor (7) umfasst in den Steigspalt **(4),** der durch die Flächen **(4a)** und **(4b)** ausgebildet wird, eingeleitet und verlässt diesen über die Austrittsöffnungen **(6).** Die Flächen **(4a)** und **(4b)** sind mit Abstandshaltern zueinander befestigt.

Figur 2 bildet eine L-förmige Vorrichtung **(1)** gemäss der Erfindung ab. Diese Vorrichtung umfasst weiterhin eine Umlenkung **(8)** und einen Auströmspalt **(9)** der durch die Platten **(9a)** und **(9b)** ausgebildet wird. Die Austrittsöffnung **(6)** befindet sich am Ende des Auströmspalts **(9).** Die Flächen **(4a)** und **(4b)** sowie die Platten **(9a)** und **(9b)** sind mit Abstandshaltern zueinander befestigt.

Figur 3 zeigt einen Kammerdiffusor gemäss der vorliegenden Erfindung. Die obere Kammer **(10a2)** und die untere Kammer **(10a1)** werden durch die Platte **(10b)** getrennt und sind durch den Spalt **(10c)** verbunden. Das Fluid wird durch ein Rohr in die unter Kammer **(10a1)** des Diffusors eingeleitet und trifft zunächst auf deren hintere Wand. Von dort strömt das Fluid zurück und tritt durch den Spalt **(10c)** in die obere Kammer **(10a2)** ein und wird schliesslich durch die lochförmig ausgeformte Verbindung **(5)** mit dem Radius **(5r)** in den Steigspalt **(4)** eingeleitet.

In Figur 4 ist eine Ansicht einer U-förmigen Vorrichtung **(1)** gemäss der vorliegenden Erfindung in einem Behälter **(2)** von oben. Die Vorrichtung weisst dabei zwei Umlenkungen **(8)** sowie 2 Auströmkanäle **(9)** auf. Die beiden Austrittsöffnungen **(6)** befinden sich jeweils am Ende der Auströmkanäle **(9).** Die Flächen **(4a)** und **(4b)** sowie die Platten **(9a)** und **(9b)** sind mit Abstandshaltern zueinander befestigt.

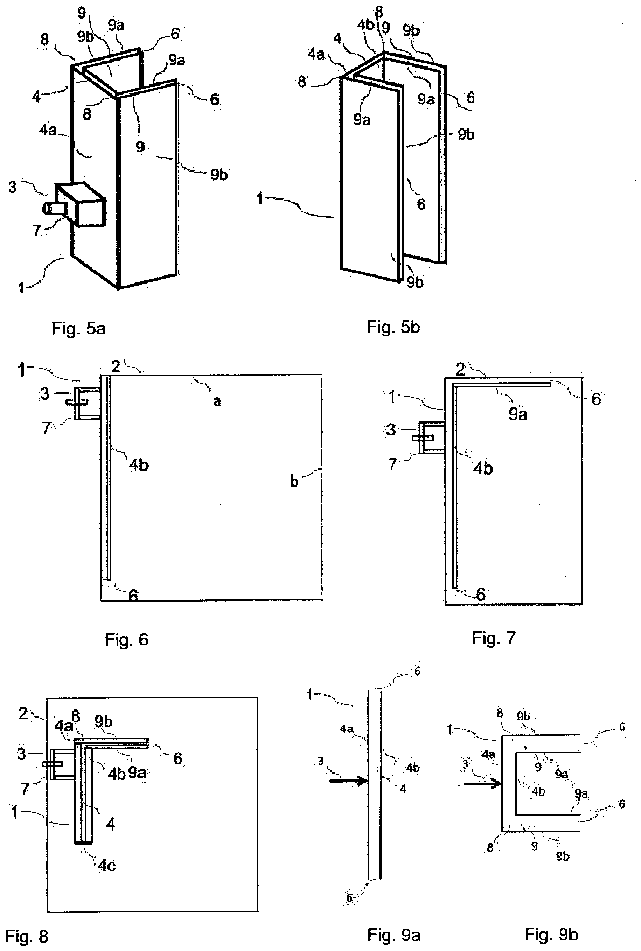

Figuren 5a und 5b bilden eine U-förmige Vorrichtung **(1)** gemäss der vorliegenden Erfindung in verschiedenen Perspektiven ab.

Die Figuren 6 bis 8 zeigen Vorrichtungen **(1)** gemäss der vorliegenden Erfindung in einem Behälter **(2),** wobei die Einströmvorrichtung verschieden positioniert ist. Figuren 6 und 7 zeigen Konstruktionen bei denen die Einströmvorrichtung komplett ausserhalb des Behälters liegt, gemäss Figur 8 ist der Diffusor im Behälter angeordnet und ein Rohr ausserhalb des Behälters. Der Steigspalt **(4)** ist durch eine seitliche Abschlussplatte **(4c)** verschlossen. Bei der Vorrichtung **(1)** gemäss Figur 6 wird eine Fläche des Steigspalts **(4)** durch die Wand des Behälters **(2)** ausgebildet. Die Vorrichtung **(1)** gemäss Figur 7 ist derart ausgebildet, dass die Wand des Behälters **(2)** eine Fläche des Steigspalts und eine Platte des Auströmspalts **(9)** bildet. Die Fläche **(4b)** sowie die Platte **(9b)** sind mit Abstandshaltern zur Wand des Behälters **(2)** befestigt.

Figur 9a zeigt einen Steigspalt **(4)** mit 2 Austrittsöffnungen **(6),** wohingegen Figur 9b einen Steigspalt **(4)** abbildet, der über 2 Umlenkungen **(8)** mit 2 Ausströmspalten **(9)** verbunden ist die je eine Austrittsöffnung **(6)** enthalten. Die Flächen **(4a)** und **(4b)** sowie die Platten **(9a)** und **(9b)** sind mit Abstandshaltern zueinander befestigt.

Figur 10 bildet einen Runddiffusor ab, der in den folgenden Beispielen zum Einsatz kam. Figuren 11a und 11b zeigen die zirkulare Anordnung eines Steigspalts **(4)** mit einer Austrittsöffnung **(6).** Die Pfeile zeigen, auch in den folgenden Figuren, mögliche Einströmrichtungen oder Einströmpositionen.

Figuren 12a bis 12d, 13a bis 13c und 14a bis 14c zeigen Ausschnitte aus einer Vorrichtung **(1)** gemäss der vorliegenden Erfindungen und verdeutlichen die Vielfalt der möglichen Geometrien. Dargestellt sind jeweils verschiedenen Anordnungen des Steigspalts sowie der Austrittsöffnungen und sofern vorhanden des oder der Ausströmspalte.

### BEZUGSZEICHENLISTE:

**1:** Vorrichtung
**2:** Behälter
**3:** Einströmvorrichtung
**4:** Steigspalt
**4a:** hintere Fläche zur Ausbildung des Steigspalts **(4)**
**4b:** vordere Fläche zur Ausbildung des Steigspalts **(4)**
**4c:** Abschlussplatte bei exzentrischer Einströmung
**5:** Verbindung zwischen Einströmvorrichtung **(3)** und Steigspalt **(4)**
**5r:** Radius der Verbindung **(5)**
**6:** Austrittsöffnung
**7:** Diffusor
**8:** Umlenkvorrichtung
**9:** Ausströmspalt
**9a:** äussere Platte zur Ausbildung des Ausströmspalts **(9)**
**9b:** innere Platte zur Ausbildung des Ausströmspalts **(9)**
**10a:** Kammer des Kammerdiffusors
**10a1:** obere Kammer des Kammerdiffusors
**10a2:** unter Kammer des Kammerdiffusors
**10b:** Platte des Kammerdiffusors
**10c:** Spalt des Kammerdiffusors
**11:** Aussenwand des Behälters
**12:** Aussenwand des Kammerdiffusors

### EXPERIMENTELLER TEIL

Die vorliegenden Ausführungsbeispiele dienen dazu die Erfindung näher zu illustrieren, sind aber in keiner Weise als einschränkend anzusehen.

### Versuchbeschreibung

Zur Durchführung der unten beschriebenen Versuche wurde ein oben offener, rechteckiger, nicht isolierter Plexiglasbehälter verwendet, der folgende Masse aufwies. Platten mit 8 mm Dicke und einer Seitenlänge von 500 x 500 mm, Höhe 1500mm

Die Beispiele B1 bis B3 wurden mit Platten aus 8 mm dickem Plexiglas verwendet, die Konstruktion der Platten ist in Figur 9 dargestellt, wobei die Platten die folgende Masse aufweisen.

### Figur 9a:

Höhe der Platten **(4a)** und **(4b):** 150 cm
Breite der Platte **(4a, 4b):** 40 cm

### Figur 9b:

Höhe der Platten **(4a)** und **(4b):** 150 cm
Breite der Platte **(4a):** 20 cm
Breite der Platte **(4b):** 17.2 bis 14.4 cm (je nach Mass des Ausströmspalts **(9)**
Länge des Ausströmspalts **(9):** 20 cm

Die Einströmvorrichtung **(3)** bestand aus einem Rohr mit Innendurchmesser von 25 mm und einem Diffusor, dabei kamen ein Runddiffusor und ein Plattendiffusor gemäss unten stehender Beschreibung zum Einsatz.

Runddiffusor Df1 gemäss Figur 10: Öffnungswinkel 7° Dk = 2 cm, DL = 15 cm, D = 7 cm Kammerdiffusor Df2 gemäss Figur 3.
Innenmasse der Kammer **(10a):** Breite = 10 cm, Höhe H = 10 cm,
Länge L = 10 cm
Spalt **(10c)** = 8 mm
Kammer **(10a1):** Höhe = 15 mm, Breite = 100 mm
Zwischenplatte **(10b):** Länge = 92 mm, Dicke = 18 mm
Verbindung **(5):** A =15 mm x1 0cm, Radius **(5r)** am Steigspalt **(4)** = 5 mm.

**Tabelle 1: Beschreibung der getesteten Vorrichtungen.**

| Beispiel | Plattenanordung | Diffusortyp | Breite Steigspalt **(4)** [mm]^{a)} | Breite Ausströmspalt **(9)** [mm]^{b)} | Durchfluss [l/min]^{c)} |
|---|---|---|---|---|---|
| B1 | Fig. 9a | Dif1 | 6 | 6 | 1.8 |
| B2 | Fig. 9b | Dif2 | 3.6 | 4.8 | 2.5 |
| B3 | Fig. 9b | Dif2 | 3.6 | 4.8 | 7.7 |

| | | | | | |
|---|---|---|---|---|---|
| *k.A.* = *keine Angabe; a) Abstand zwischen **(4a)** und **(4b)** des Steigspalts **(4);** b) Abstand zwischen den Platten **(9a)** und **(9b)** des Ausströmspalts **(9);** c) Durchfluss an Wasser mit der Temperatur T1.* | | | | | |

Bei den Beispielen B1 bis B3 wurden die zu testende Vorrichtung in den oben beschriebenen Behälter eingebracht, welcher zuvor mit Wasser einer Temperatur von 15°C (T_{B}) vollständig befüllt wurde. Die zu testende Vorrichtung wurde mit Wasser, welches eine Temperatur von 60°C (T1) aufwies beladen. Die Temperatur (T2) des Wasser am oberen Ende des Behälters (Eintauchtiefe: 1 cm, Entfernung von der Austrittsöffnung = 20 cm) wurde mittels eines Temperaturmessfühlers (PT 1000, Sensorshop, Dornach (CH)) bestimmt. Der in Tabelle 2 angegebene Schichtwirkungsgrad n wurde rechnerisch ermittelt und stellt das Verhältnis aus maximal gemessener Temperatur T2 und eingespeister Temperatur T1 dar. Ein theoretischer Schichtwirkungsgrad von 100 % würde also bedeuten, dass an der Messstelle im oberen Bereich des Behälters auch 60°C, also die Temperatur des eingespeisten Fluids, gemessen wurden.

Das Vergleichsbeispiel VB1 entspricht einem Aufbau gemäss EP 1 076 219 A1und das Vergleichsbeispiel VB2 einem Aufbau gemäss EP 0683 362 A1. Die Schichtwirkungsgrade von VB1 und VB2 wurden aus Daten berechnet die vom jeweiligen Anmelder zur Verfügung gestellt wurden.

**Tabelle 2: Schichtwirkunsgrad n nach verschiedenen Zeiten.**

| Beispiel | n nach 2 min | n nach 4 min | n nach 6 min | n nach 8 min | n nach 10 min | n nach 30 min |
|---|---|---|---|---|---|---|
| VB1 | 18 % | 24 % | 30 % | 38 % | 49 % | - |
| VB2 | 30 % | 42 % | 50 % | 60 % | 65 % | - |
| B1 | 45 % | 53 % | 68 % | 70 % | 74 % | 74 % |
| B2 | 66 % | 74 % | 78 % | 85 % | 88 % | 88 % |
| B3 | 79% | 85% | 89% | 91 % | 91 % | 91 % |

Überraschenderweise gelingt es mit den Vorrichtungen gemäss der vorliegenden Erfindung bereits nach 4 Minuten sehr gute Schichtwirkungsgrade von mehr als 50 % zu erreichen. Die Konstruktionen gemäss dem Stand der Technik erreichen nach der gleichen Zeit signifikant geringer Schichtwirkungsgrade. Bereits nach 10 Minuten erreichen die Vorrichtungen gemäss der vorliegenden Erfindung ein Maximum des Schichtwirkungsgrads. Die Vorrichtung gemäss dem Stand der Technik weisen auch nach 10 Minuten tiefere Schichtwirkungsgrade auf. Nur eine Vorrichtung mit der Merkmalskombination gemäss der vorliegenden Erfindung ermöglicht es innerhalb von 10 Minuten zu Schichtwirkungsgraden von grösser als 70 % zu gelangen.

## Patentansprüche

1. Vorrichtung **(1)** zum Einspeisen eines Fluids in einen Behälter **(2),** umfassend
a) mindestens eine Einströmvorrichtung **(3);**
b) mindestens einen Steigspalt **(4)** der durch eine hintere Fläche **(4a)** und eine vordere Fläche **(4b)** ausgebildet wird, wobei die Flächen **(4a)** und **(4b)** im wesentlichen in vertikaler Richtung parallel zueinander angeordnet sind und ihr Abstand im Bereich von 2.5 bis 10 mm liegt und die Flächen **(4a)** und **(4b)** zum Behälter **(2)** im wesentlichen vertikal orientiert sind;
c) mindestens eine Verbindung **(5)** zwischen der Einströmvorrichtung **(3)** und dem mindestens einen Steigspalt **(4);**
d) mindestens eine Austrittsöffnung **(6);**
**dadurch gekennzeichnet, dass** die mindestens eine Einströmvorrichtung **(3)** mindestens einen Diffusor **(7)** umfasst und der Diffusor (7) eine Kammer **(10a),** einer Platte **(10b)** und einem Spalt **(10c)** umfasst; wobei durch die Platte **(10b)** eine obere Kammer **(10a1)** und eine untere Kammer **(10a2)** ausgebildet werden; wobei der Spalt **(10c)** eine für ein Fluid durchlässige Öffnung zwischen den beiden Kammern **(10a1)** und **(10a2)** ausbildet; wobei die Einströmvorrichtung **(3)** mit der unteren Kammer **(10a2)** verbunden ist; und wobei die Verbindung **(5)** zwischen der oberen Kammer **(10a2)** und dem Steigspalt **(4)** angeordnet ist..

2. Vorrichtung **(1)** nach Anspruch 1, **dadurch gekennzeichnet, dass** diese weiterhin
e) mindestens eine mit dem Steigspalt **(4)** verbundene Umlenkvorrichtung **(8)** und/oder
f) mindestens einen Ausströmspalt **(9)** der durch eine äussere Platte **(9a)** und eine innere Platte **(9b)** ausgebildet wird, wobei die Platten **(9a)** und **(9b)** im wesentlichen parallel zueinander angeordnet sind und ihr Abstand im Bereich von 3 bis 10 mm liegt und die Platten **(9a)** und **(9b)** zum Behälter **(2)** im wesentlichen vertikal orientiert sind;
umfasst.

3. Vorrichtung **(1)** nach Anspruch 2, **dadurch gekennzeichnet, dass** die mindestens eine Austrittsöffnung **(6)** am Ende des mindestens einen Ausströmspalts **(9)** angebracht ist.

4. Vorrichtung **(1)** nach Anspruch 2 oder 3, **dadurch gekennzeichnet, dass** sich der Ausströmspalt **(9)** im wesentlichen in vertikaler Richtung über die Höhe des Behälters **(2)** erstreckt.

5. Vorrichtung **(1)** nach einem der Ansprüche 1 bis 4, **dadurch gekennzeichnet, dass** der Spalt **(10c)** zwischen der Aussenwand **(12)** und der Platte **(10b)** angeordnet ist und/oder die Breite des Spalts **(10c)** im Bereich von 2 bis 20 mm, bevorzugt 5 bis 15 mm und besonders bevorzugt 6 bis 10 mm liegt.

6. Vorrichtung **(1)** nach einem der Ansprüche 1 bis 5, **dadurch gekennzeichnet, dass** die Verbindung **(5)** ein Loch ist welches rechteckig, kreisförmig oder ellipsenförmig ausgeformt wird, bevorzugt ist ein rundes oder elliptisch ausgeformtes Loch und besonders bevorzugt ein rechteckig ausgeformtes Loch welches umlaufend zum Steigspalt hin einen Radius **(5r)** von mindestens 3 mm aufweist.

7. Vorrichtung **(1)** nach einem der Ansprüche 1 bis 6, **dadurch gekennzeichnet, dass** der Steigspalt **(4)** über die komplette Länge einen gleichen oder variablen Abstand zwischen den Flächen **(4a)** und **(4b)** aufweist, wobei ein variabler Abstand bevorzugt ist und/oder der Steigspalt eine Länge von 5 cm bis 10 m, bevorzugt 10 cm bis 3 m und besonders bevorzugt 15 cm bis 1.5 m aufweist.

8. Vorrichtung **(1)** nach einem der Ansprüche 1 bis 7, **dadurch gekennzeichnet, dass** die Flächen **(4a)** und **(4b)** ausgewählt sind aus der Gruppe bestehend aus Platten, bevorzugt gekrümmten oder geformten Platten und Rohren.

9. Vorrichtung **(1)** nach einem der Ansprüche 2 bis 8, **dadurch gekennzeichnet, dass** der Ausströmspalt **(9)** eine Länge im Bereich von 5 cm bis 1 m, bevorzugt von 10 bis 50 cm und besonders bevorzugt von 15 bis 30 cm aufweist.

10. Vorrichtung **(1)** nach einem der Ansprüche 2 bis 9, **dadurch gekennzeichnet, dass** die Flächen **(4a)** und **(4b)** und/oder die Platten **(9a)** und **(9b)** aus einem Material ausgewählt aus der Gruppe bestehend aus Polypropylen, Polystyrol, Polyamid, Polyketon, Polyphenylensulfid, Polyphenyloxid, Polyoxymethylen, Fluorkunststoffen, Epoxyharzen, Polyesterharzen, Vinylesterharzen und Phenolharzen und/oder Mischungen daraus ist, wobei Polyethylen und Polypropylen bevorzugt sind und/oder, dass die Flächen **(4a)** und **(4b)** und/oder die Platten **(9a)** und **(9b)** aus einer thermisch isolierenden Konstruktion aufgebaut sind.

11. Vorrichtung **(1)** nach einem der Ansprüche 1 bis 10, **dadurch gekennzeichnet, dass** die Vorrichtung **(1)** eine Austrittsöffnung **(6)** enthält und die Vorrichtung 1 zirkular oder L-förmig aufgebaut ist, oder die Vorrichtung **(1)** zwei Austrittsöffnungen **(6a)** und **(6b)** enthält und U-förmig oder T-förmig aufgebaut ist, wobei ein U-förmiger Aufbau bevorzugt ist.

12. Behälter **(2)** enthaltend eine Vorrichtung **(1)** nach einem der Ansprüche 1 bis 11.

13. Behälter **(2)** nach Anspruch 12, **dadurch gekennzeichnet, dass** dieser aus einem Material besteht welches ausgewählt ist aus der Gruppe bestehend aus Stahl, bevorzugt Edelstahl, Kunststoffen und Verbundwerkstoffen und/oder Mischungen daraus, wobei Edelstahl bevorzugt ist und/oder eine Wandstärke im Bereich von 0.5 bis 10 mm, bevorzugt von 1 bis 10 mm und besonders bevorzugt von 1 bis 3 mm aufweist und/oder eine Höhe im Bereich von 1 bis 100 m, bevorzugt von 1 bis 10 m und besonders bevorzugt von 1 bis 2.5 m aufweist und/oder in mindestens einer Dimensionen, bevorzugt in beiden Dimensionen, eine Breite b und/oder Tiefe a im Bereich von 0.3 bis 10 m, bevorzugt von 0.3 bis 5 m und besonders bevorzugt von 0.5 bis 1.5 m aufweist.

14. Verwendung einer Vorrichtung **(1)** gemäss einem der Ansprüche 1 bis 11 oder eines Behälters **(2)** gemäss einem der Ansprüche 12 oder 13 in den Bereichen Solartechnik oder Haustechnik.

15. Verfahren zum Einspeisen eines Fluids in einen Behälter **(2),** wobei eine Vorrichtung **(1)** gemäss einem der Ansprüche 1 bis 11 verwendet wird.

## Claims

1. Device **(1)** for feeding a fluid into a container **(2),** comprising
a) at least one inflow device **(3);**
b) at least one rising gap **(4)** formed by a rear surface **(4a)** and a front surface **(4b),** the surfaces **(4a)** and **(4b)** being arranged in parallel with one another substantially in the vertical direction, and the distance between them being in the range from 2.5 to 10 mm, and the surfaces **(4a)** and **(4b)** being oriented substantially vertically in relation to the container **(2);**
c) at least one connection **(5)** between the inflow device **(3)** and the at least one rising gap **(4);**
d) at least one outlet opening **(6);**
**characterised in that** the at least one inflow device **(3)** comprises at least one diffuser **(7)** and the diffuser **(7)** comprises a chamber **(10a),** a plate **(10b)** and a gap **(10c);** an upper chamber **(10a1)** and a lower chamber **(10a2)** being formed by the plate **(10b);** the gap **(10c)** forming an opening between the two chambers **(10a1)** and **(10a2),** which opening allows a fluid to pass through; the inflow device **(3)** being connected to the lower chamber **(10a2);** and the connection **(5)** being arranged between the upper chamber **(10a2)** and the rising gap **(4).**

2. Device **(1)** according to claim 1, **characterised in that** it further comprises
e) at least one diversion device **(8)** connected to the rising gap **(4)** and/or
f) at least one outflow gap **(9)** formed by an outer plate **(9a)** and an inner plate **(9b),** the plates **(9a)** and **(9b)** being arranged substantially in parallel with one another, and the distance between them being in the range from 3 to 10 mm, and the plates **(9a)** and **(9b)** being oriented substantially vertically in relation to the container **(2).**

3. Device **(1)** according to claim 2, **characterised in that** the at least one outlet opening **(6)** is fitted at the end of the at least one outflow gap **(9).**

4. Device **(1)** according to claim 2 or claim 3, **characterised in that** the outflow gap **(9)** extends above the height of the container **(2)** substantially in the vertical direction.

5. Device **(1)** according to any of claims 1 to 4, **characterised in that** the gap **(10c)** is arranged between the outer wall (12) and the plate (10b) and/or the width of the gap (10c) is in the range from 2 to 20 mm, preferably 5 to 15 mm and particularly preferably 6 to 10 mm.

6. Device **(1)** according to any of claims 1 to 5, **characterised in that** the connection **(5)** is a hole having a rectangular, circular or elliptical shape, preferably is a round or elliptically shaped hole, and particularly preferably is a rectangularly shaped hole that has a radius **(5r)** of at least 3 mm circumferentially towards the rising gap.

7. Device **(1)** according to any of claims 1 to 6, **characterised in that** over the entire length the rising gap **(4)** has the same or a varying distance between the surfaces **(4a)** and **(4b),** a variable distance being preferred and/or the rising gap having a length of 5 cm to 10 m, preferably 10 cm to 3 m and particularly preferably 15 cm to 1.5 m.

8. Device **(1)** according to any of claims 1 to **7, characterised in that** the surfaces **(4a)** and **(4b)** are selected from the group consisting of plates, preferably curved or shaped plates and tubes.

9. Device **(1)** according to any of claims 2 to 8, **characterised in that** the outflow gap **(9)** has a length in the range from 5 cm to 1 m, preferably from 10 to 50 cm and particularly preferably from 15 to 30 cm.

10. Device **(1)** according to any of claims 2 to 9, **characterised in that** the surfaces **(4a)** and **(4b)** and/or the plates **(9a)** and **(9b)** are made of a material selected from the group consisting of polypropylene, polystyrene, polyamide, polyketone, polyphenylene sulfide, polyphenyl oxide, polyoxymethylene, fluoroplastics, epoxy resins, polyester resins, vinyl ester resins and phenol resins and/or mixtures thereof, polyethylene and polypropylene being preferred, and/or **in that** the surfaces **(4a)** and **(4b)** and/or the plates **(9a)** and **(9b)** are constructed from a thermally insulating structure.

11. Device **(1)** according to any of claims 1 to 10, **characterised in that** the device **(1)** includes an outlet opening **(6)** and the device **(1)** has a circular or L-shaped construction, or the device **(1)** includes two outlet openings **(6a)** and **(6b)** and is constructed in a U shape or T shape, a U-shaped construction being preferred.

12. Container **(2)** including a device **(1)** according to any of claims 1 to 11.

13. Container **(2)** according to claim 12, **characterised in that** it consists of a material selected from the group consisting of steel, preferably stainless steel, plastics materials and composite materials and/or mixtures thereof, stainless steel being preferred, and/or has a wall thickness in the range from 0.5 to 10 mm, preferably from 1 to 10 mm and particularly preferably from 1 to 3 mm, and/or a height in the range from 1 to 100 m, preferably from 1 to 10 m and particularly preferably from 1 to 2.5 m and/or has, in at least one dimension, preferably in both dimensions, a width b and/or a depth a in the range from 0.3 to 10 m, preferably from 0.3 to 5 m and particularly preferably from 0.5 to 1.5 m.

14. Use of a device **(1)** according to any of claims 1 to 11 or of a container **(2)** according to any of claims 12 or 13 in solar engineering or building services engineering.

15. Method for feeding a fluid into a container **(2),** wherein a device **(1)** according to any of claims 1 to 11 is used.

## Revendications

1. Dispositif **(1)** pour injecter un fluide dans un récipient **(2),** comprenant
a) au moins un dispositif d'admission **(3)** ;
b) au moins une fente montante **(4)** qui est réalisée par une surface arrière **(4a)** et une surface avant **(4b),** dans lequel les surfaces **(4a)** et **(4b)** sont disposées sensiblement parallèlement l'une à l'autre dans la direction verticale et leur distance se situe dans la plage de 2,5 à 10 mm et les surfaces **(4a)** et **(4b)** sont orientées sensiblement verticalement par rapport au récipient **(2)** ;
c) au moins une liaison **(5)** entre le dispositif d'admission **(3)** et la au moins une fente montante **(4) ;**
d) au moins une ouverture de sortie **(6) ;**
**caractérisé en ce que** le au moins un dispositif d'admission **(3)** comprend au moins un diffuseur **(7)** et ledit diffuseur **(7)** comprend une chambre **(10a),** une plaque **(10b)** et une fente **(10c);** dans lequel une chambre supérieure **(10a1)** et une chambre inférieure **(10a2)** sont réalisées par la plaque **(10b)** ; dans lequel la fente **(10c)** réalise une ouverture perméable à un fluide entre les deux chambres **(10a1)** et **(10a2)** ; dans lequel le dispositif d'admission **(3)** est relié à la chambre inférieure **(10a2)** ; et dans lequel la liaison **(5)** est disposée entre la chambre supérieure **(10a2)** et la fente montante **(4).**

2. Dispositif **(1)** selon la revendication 1, **caractérisé en ce qu'**il comprend en outre
e) au moins un dispositif de déviation **(8)** relié à la fente montante **(4)** et/ou
f) au moins une fente d'évacuation **(9)** qui est réalisée par une plaque extérieure **(9a)** et une plaque intérieure **(9b),** dans lequel les plaques **(9a)** et **(9b)** sont disposées sensiblement parallèlement l'une à l'autre et leur distance se situe dans la plage de 3 à 10 mm et les plaques **(9a)** et **(9b)** sont orientées sensiblement verticalement par rapport au récipient **(2).**

3. Dispositif **(1)** selon la revendication 2, **caractérisé en ce que** la au moins une ouverture de sortie **(6)** est placée à l'extrémité de la au moins une fente d'évacuation **(9).**

4. Dispositif **(1)** selon la revendication 2 ou 3, **caractérisé en ce que** la fente d'évacuation**(9)** s'étend sensiblement dans la direction verticale sur la hauteur du récipient **(2).**

5. Dispositif **(1)** selon l'une quelconque des revendications 1 à 4, **caractérisé en ce que** la fente **(10c)** est disposée entre la paroi extérieure **(12)** et la plaque **(10b)** et/ou la largeur de la fente **(10c)** se situe dans la plage de 2 à 20 mm, de préférence 5 à 15 mm et de manière particulièrement préférée 6 à 10 mm.

6. Dispositif **(1)** selon l'une quelconque des revendications 1 à 5, **caractérisé en ce que** la liaison **(5)** est un trou, lequel est de forme rectangulaire, circulaire ou elliptique, un trou de forme ronde ou elliptique et de manière particulièrement préférée un trou de forme rectangulaire lequel présente un rayon **(5r)** d'au moins 3 mm tout autour de la fente montante est préféré.

7. Dispositif **(1)** selon l'une quelconque des revendications 1 à 6, **caractérisé en ce que** la fente montante **(4)** présente sur toute la longueur une distance identique ou variable entre les surfaces **(4a)** et **(4b),** dans lequel une distance variable est préférée et/ou la fente montante présente une longueur de 5 cm à 10 m, de préférence 10 cm à 3 m et de manière particulièrement préférée 15 cm à 1,5 m.

8. Dispositif **(1)** selon l'une quelconque des revendications 1 à 7, **caractérisé en ce que** les surfaces **(4a)** et **(4b)** sont choisies dans le groupe constitué par des plaques, de préférence des plaques courbées ou formées, et des tubes.

9. Dispositif **(1)** selon l'une quelconque des revendications 2 à 8, **caractérisé en ce que** la fente d'évacuation **(9)** présente une longueur dans la plage de 5 cm à 1 m, de préférence de 10 à 50 cm et de manière particulièrement préférée de 15 à 30 cm.

10. Dispositif **(1)** selon l'une quelconque des revendications 2 à 9, **caractérisé en ce que** les surfaces **(4a)** et **(4b)** et/ou les plaques **(9a)** et **(9b)** ont une structure composée d'un matériau choisi dans le groupe constitué par le polypropylène, le polystyrène, le polyamide, la polycétone, le poly(sulfure de phénylène), le poly(oxyde de phényle), le polyoxyméthylène, les plastiques fluorés, les résines époxy, les résines de polyester, les résines d'ester vinylique et les résines phénoliques et/ou leurs mélanges, dans lequel le polyéthylène et le polypropylène sont préférés, et/ou que les surfaces **(4a)** et **(4b)** et/ou les plaques **(9a)** et **(9b)** ont une structure thermiquement isolante.

11. Dispositif **(1)** selon l'une quelconque des revendications 1 à 10, **caractérisé en ce que** le dispositif **(1)** contient une ouverture de sortie (6) et le dispositif 1 est circulaire ou en forme de L, ou le dispositif (1) contient deux ouvertures de sortie **(6a)** et **(6b)** et a une structure en forme de U ou de T, dans lequel une structure en forme de U est préférée.

12. Récipient **(2)** contenant un dispositif **(1)** selon l'une quelconque des revendications 1 à 11.

13. Récipient **(2)** selon la revendication 12, **caractérisé en ce que** celui-ci est constitué d'un matériau qui est choisi dans le groupe constitué par l'acier, de préférence l'acier inoxydable, les matières plastiques et les matériaux composites et/ou leurs mélanges, dans lequel l'acier inoxydable est préféré et/ou présente une épaisseur de paroi dans la plage de 0,5 à 10 mm, de préférence de 1 à 10 mm et de manière particulièrement préférée de 1 à 3 mm et/ou présente une hauteur dans la plage de 1 à 100 m, de préférence de 1 à 10 m et de manière particulièrement préférée de 1 à 2,5 m et/ou présente dans au moins une dimension, de préférence dans les deux dimensions, une largeur b et/ou profondeur a dans la plage de 0,3 à 10 m, de préférence de 0,3 à 5 m et de manière particulièrement préférée de 0,5 à 1,5 m.

14. Utilisation d'un dispositif **(1)** selon l'une quelconque des revendications 1 à 11 ou d'un récipient **(2)** selon l'une quelconque des revendications 12 ou 13 dans les domaines de la technique solaire ou de la domotique.

15. Procédé d'injection d'un fluide dans un récipient **(2),** dans lequel un dispositif **(1)** selon l'une quelconque des revendications 1 à 11 est utilisé.
